# EUROPÄISCHE PATENTANMELDUNG

(11) **EP 1 564 046 A2**
(43) Veröffentlichungstag der Anmeldung: **17.08.2005**
(21) Anmeldenummer: 05001632.8
(22) Anmeldetag: 27.01.2005
(51) Int. Cl.: B60H 1/00

(54) **Verfahren zur Regelung einer Heizungsanordnung**

(30) Priorität: 10.02.2004 DE 102004006591
(71) Anmelder: Behr GmbH & Co. KG, 70469 Stuttgart (DE)
(72) Erfinder: Baruschke, Wilhelm, Dipl.-Ing., 73117 Wangen (DE); Lochmahr, Karl, Dipl.-Ing. (FH), 71665 Vaihingen/Enz (DE); Pitz, Eric, 70199 Stuttgart (DE)

(57) **Zusammenfassung**

Die Erfindung betrifft eine Heizungsanordnung (19) und ein Verfahren zur Heizungsregelung, insbesondere für Kraftfahrzeuge. Die Heizungsanordnung (19) umfasst einen durch eine Vorlaufleitung (20) und eine Rücklaufleitung (22) mit einem Kühlkreislauf (KK), beispielsweise dem Kühlkreislauf (KK) eines Verbrennungsmotors, verbundenen Heizungswärmetauscher (24) und eine in der Vorlaufleitung (20) angeordnete, elektrisch ansteuerbare Heizungswasserpumpe (28) sowie einen mit der Heizungswasserpumpe (28) in Wirkverbindung stehenden Regler, wobei im Heizkreislauf (HK) keine Ventile vorhanden sind. Beim Verfahren zur Regelung der Temperatur eines in einem Heizungskreislauf (HK) angeordneten Heizungswärmetauschers (24), insbesondere einer Heizungs- und Klimaanlage (1) für ein Fahrzeug, wird die Temperatur des Heizungswärmetauschers (24) wasserseitig geregelt, indem als Stellgröße ein Fördervolumenstrom einer Heizungswasserpumpe (28) im Heizungskreislauf (HK) vorgegeben wird.

## Beschreibung

Die Erfindung betrifft eine Heizungsanordnung und ein Verfahren zur Heizungsregelung, insbesondere für ein Fahrzeug.

Zur Klimatisierung eines Fahrzeuginnenraums werden üblicherweise Heizungs- und Klimaanlagen mit in einem Kühlkreislauf angeordneten Kühler und Heizungswärmetauscher verwendet, die sich in der Art der Temperaturregelung unterscheiden. Bekannt sind zum einen wasserseitig geregelte Heizungs- und Klimaanlagen, bei denen die Temperaturregelung des Heizungswärmetauscher mittels im Kühlkreislauf angeordneter Ventile, wie z. B. Takt-Absperrventil oder Takt-3-Wegeventil mit zusätzlichem Heizungswärmetauscher-Bypass, erfolgt. Andere bekannte wasserseitig geregelte Heizungs- und Klimaanlagen verwenden zur Regelung der Heizungswärmetauscher-Temperatur ein stetiges Wasserventil, das als 2- oder 3-Wegeventil ausgeführt sein kann und ggf. von einer Zusatzwasserpumpe unterstützt wird.

Zum anderen sind luftseitig geregelte Heizungs- bzw. Klimaanlagen bekannt. Bei luftseitig geregelten Heizungs- und Klimaanlagen erfolgt die Regelung oder Steuerung einer Mischraum- oder Austrittstemperatur über das Mischungsverhältnis von Kalt- und Warmluft. Zusätzlich wird die luftseitige Temperaturregelung durch Steuerung einer Zusatzwasserpumpe wasserseitig oder zur Vermeidung von Restaufheizung im Sommerbetrieb durch ein im Kühlkreislauf angeordnetes Heizungswärmetauscher-Absperrventil unterstützt.

Bei wasserseitigen Regelungen umfasst die Aktorik nach dem Stand der Technik ein Taktventil oder ein stetiges Ventil sowie eine Zusatzwasserpumpe, deren Schaltzustände normalerweise nur "Ein" und "Aus" beinhalten. Das Taktventil bzw. das stetige Ventil und die Zusatzwasserpumpe werden dabei über aufwendige elektronische Leistungsbauteile angesteuert.

Die Aufgabe der Erfindung besteht darin, eine besonders einfach ausgeführte Heizungsanordnung und ein Verfahren zur Heizungsregelung, insbesondere für ein Fahrzeug, anzugeben.

Erfindungsgemäß wird die Aufgabe hinsichtlich des Verfahrens gelöst durch die Merkmale des Anspruchs 1 und hinsichtlich der Heizungsanordnung durch die Merkmale des Anspruchs 8. Vorteilhafte Ausgestaltungen der Erfindung sind Gegenstand von Unteransprüchen.

Beim Verfahren zur Regelung der Temperatur eines in einem Heizungskreislauf angeordneten Heizungswärmetauschers, insbesondere einer Heizungs- und Klimaanlage für ein Fahrzeug, wird die Temperatur des Heizungswärmetauschers wasserseitig geregelt, indem als Stellgröße ein Fördervolumenstrom einer im Heizungskreislauf angeordneten Heizungswasserpumpe vorgegeben wird. Bei einer derartigen, lediglich auf die Steuerung einer Heizungswasserpumpe ausgelegten Temperaturregelung sind keine zusätzlichen, aufwendigen Ventile gemäß dem Stand der Technik erforderlich.

Hierdurch ist auf einfache Art und Weise eine Heizungsregelung (Heizungswärmetauscher-Temperaturregelung) gegeben, die mit wenigen Bauteilen auskommt, jedoch hinsichtlich Regelgüte und Komfort mit herkömmlichen Heizungsregelungen zumindest gleichwertig ist.

Die Führungsgröße für die Temperaturregelung des Heizungswärmetauschers wird aus einem überlagerten Innenraumtemperatur-Regelkreis abgeleitet. Die Temperaturdifferenz wird anhand der Soll-Temperatur des Heizungswärmetauschers und der Ist-Temperatur nach dem Heizungswärmetauscher ermittelt. Die ermittelte Temperaturdifferenz wird zweckmäßigerweise einem Temperaturregler, insbesondere einem PI- oder einem PID-Regler, zugeführt, dessen Ausgangssignal mittels eines Stellglieds anhand einer Kennlinie zu der Stellgröße verarbeitet wird, anhand derer dann der Fördervolumenstrom eingestellt wird. Das Stellglied erzeugt anhand der Kennlinie eine Stellgröße für die elektrisch steuerbare Heizungswasserpumpe. Die Heizungswasserpumpe erzeugt daraufhin einen durch die Stellgröße vorgegebenen Fördervolumenstrom durch den Heizungswärmetauscher. Mit anderen Worten: In Abhängigkeit von der Regeldifferenz (= Temperaturdifferenz) wird mittels eines Temperaturreglers und einer Stell-Kennlinie die Temperatur hinter dem Heizungswärmetauscher über die Förderleistung (= Fördervolumen je Zeiteinheit, Fördervolumenstrom) einer elektrisch steuerbaren Heizungswasserpumpe geregelt.

Je nach vorgegebener Betriebsart kann die Heizungswasserpumpe kontinuierlich betrieben werden, wobei eine Änderung der Stellgröße eine Änderung des Fördervolumenstroms der Heizungswasserpumpe bewirkt. D. h. die Fördermenge der Heizungswasserpumpe wird kontinuierlich eingestellt. Alternativ kann die Heizungswasserpumpe getaktet betrieben werden, wobei eine Änderung der Stellgröße eine Änderung des Pulsweitenmodulationsgrads der Ansteuerung der Heizungswasserpumpe bewirkt. D. h. die Fördermenge der Heizungswasserpumpe wird quasi stetig eingestellt.

Je nach Einstellung der Heizungswasserpumpe mittels der Stellgröße wird zweckmäßigerweise ein über den Fördervolumenstrom der Heizungswasserpumpe hinausgehender Wasserstrom über eine Bypass-Leitung vor der Heizungswasserpumpe abgezweigt. Insbesondere wird der Wasserstrom dem Kühlkreislauf der Heizungs- und Klimaanlage wieder zugeführt. Im Fall eines maximalen Fördervolumenstroms der Heizungswasserpumpe wird der Wasserstrom über die Bypass-Leitung auf null reduziert. Bei einem Fördervolumenstrom kleiner dem Maximalwert kann stets ein Teil des Wasserstroms über die Bypass-Leitung geführt werden.

Die Heizungsanordnung umfasst zur wasserseitigen Temperaturregelung eines durch eine Vorlaufleitung und eine Rücklaufleitung mit einem Kühlkreislauf, beispielsweise dem Kühlkreislauf eines Verbrennungsmotors, verbundenen Heizungswärmetauschers eine im Heizungskreislauf angeordnete, elektrisch ansteuerbare Heizungswasserpumpe sowie einen mit der Heizungswasserpumpe derart in Wirkverbindung stehenden Temperaturregler, dass die Temperatur wasserseitig geregelt wird, indem als Stellgröße ein Fördervolumenstrom einer Heizungswasserpumpe vorgegeben wird. Mit anderen Worten: Die wasserseitige Temperaturregelung des Heizungswärmetauschers verzichtet auf Ventile und deren Steuerung im Heizungskreislauf; die wasserseitige Temperaturregelung wird ausschließlich über die Steuerung der Heizungswasserpumpe bewirkt.

Zur Ermittlung der Führungsgröße für die Temperaturregelung des Heizungswärmetauschers ist normalerweise ein überlagerter Innenraumtemperatur-Regelkreis vorgesehen.

Die Heizungswasserpumpe kann beispielsweise als EC-Pumpe ausgeführt sein. Hieraus resultiert eine höhere Lebensdauer. Zudem kann auf eine Wellenabdichtung zwischen Motor und Pumpe verzichtet werden.

Eine Vorlaufleitung und eine Rücklaufleitung des Heizungskreislaufs sind so mit dem Kühlkreislauf verbunden, dass zwischen den Schnittstellen des Heizungskreislaufs und des Kühlkreislaufs für einen Heizungsbypass eine Bypass-Leitung vorgesehen ist, durch die das Kühlmittel im Kühlkreislauf weiter zirkulieren kann, wenn die Heizungswasserpumpe stillsteht.

Normalerweise ist die elektrische Heizungswasserpumpe nur unterstützend tätig, um eine ausreichende Wassermenge über den Heizungswärmetauscher umzuwälzen. In hohem Maße wird der Wasserdurchsatz von der motorfesten Kühlmittelpumpe des Kühlkreislaufs geleistet. Zur Regelung der Temperatur des Heizungswärmetauschers sind aber häufig sehr kleine Fördervolumenströme durch den Heizungswärmetauscher erforderlich. Die Heizungswasserpumpe muss so aufgebaut sein, dass bei einer so genannten Null-Förderung der elektrischen Heizungswasserpumpe die Umwälzung durch die Kühlmittelpumpe des Kühlkreislaufs über die Bypass-Leitung erfolgt. Bei Zuschaltung der Heizungswasserpumpe erfolgt dann die Umwälzung sukzessive über den Heizungswärmetauscher. Bei erforderlichem maximalen Wasserdurchsatz reduziert sich somit die Wassermenge über die Bypass-Leitung auf null, so dass eine kontinuierliche Einstellbarkeit der Heizungswärmetauscher-Wassermenge von 0 % bis 100 % gegeben ist.

Die Heizungswasserpumpe kann zweckmäßigerweise getaktet betrieben werden. Hierdurch ergibt sich eine quasistetige Einstellbarkeit des Fördervolumenstroms. Dazu umfasst der Temperaturregler beispielsweise einen Taktgenerator, z. B. einen PWM-Generator. In einer vorteilhaften Ausgestaltung der Heizungsanordnung ist der Fördervolumenstrom demgegenüber kontinuierlich verstellbar.

Durch den Entfall des Taktventils oder stetigen Ventils im Heizungskreislauf können mit der Heizungsanordnung gegenüber herkömmlichen Heizungs- bzw. Klimaanlagen Vorteile hinsichtlich Kosten, Gewicht und Geräuschentwicklung erzielt werden. Gleichzeitig können bisher verwendete Ventil-Ansteuerungseinrichtungen entfallen, wodurch ebenfalls Kosten reduziert werden. Weitere Vorteile der vorgeschlagenen Heizungsanordnung sind eine Reduzierung des notwendigen Verkabelungsumfangs, geringere Störanfälligkeit durch reduzierte Anzahl von Bauteilen, gute Notlaufeigenschaften und eine Vermeidung von Restaufheizung auch ohne zusätzliches Absperrventil.

Ausführungsbeispiele der Erfindung werden nachfolgend anhand einer Zeichnung näher erläutert. Darin zeigen:
- Fig. 1: eine mögliche Ausführungsform einer Heizungsanordnung für eine Heizungs- und Klimaanlage eines Fahrzeugs mit einer Temperaturregelung über eine Heizungswasserpumpe, und
- Fig. 2: schematisch die Temperaturregelung für eine Heizungsanordnung gemäß Fig. 1.

Einander entsprechende Teile sind in allen Figuren mit den gleichen Bezugszeichen versehen.

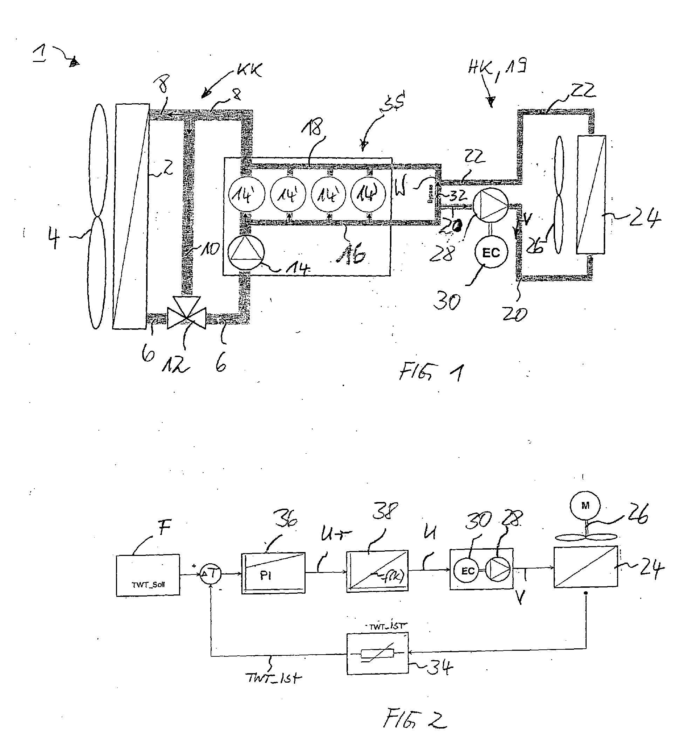

In Fig. 1 ist schematisch eine Heizungs- und Klimaanlage 1 für ein Fahrzeug dargestellt. Die Heizungs- und Klimaanlage 1 umfasst einen Kühlkreislauf KK und einen Heizungskreislauf HK.

Der Kühlkreislauf KK umfasst zur Kühlung eines nicht näher dargestellten Aggregats, wie z. B. eines Verbrennungsmotors des Fahrzeugs, einen Kühler 2 mit einem Lüfter 4 (auch Kühlerlüfter genannt). Der Kühlkreislauf KK bildet über eine Verbindung eines Kühlmittelvorlaufs 6 und eines Kühlmittelrücklaufs 8 mit dem Kühler 2 einen geschlossenen Kreislauf. Zwischen dem Kühlmittelvorlauf 6 und dem Kühlmittelrücklauf 8 ist ein Kühlerbypass 10 angeordnet, der durch ein Ventil 12, insbesondere ein 3-Wege-Ventil oder Thermostatventil, verschließbar ist. Im Kühlmittelvorlauf 6 ist eine Kühlmittelpumpe 14 angeordnet.

An den Kühlkreislauf KK schließt sich der Heizungskreislauf HK über eine Schnittstelle SS an. Die Schnittstelle SS weist einen Vorlauf 16 und einen Rücklauf 18 mit verbrennungsmotorspezifischen Abgriffen 14' an den Zylindern des Verbrennungsmotors auf.

Der Heizungskreislauf HK umfasst als eine Heizungsanordnung 19 einen über einen Heizmittelvorlauf 20 (= Vorlaufleitung) und einen Heizmittelrücklauf 22 (= Rücklaufleitung) und die Schnittstelle SS mit dem Kühlkreislauf KK verbundenen Heizungswärmetauscher 24 mit einem Gebläse 26 (auch Klimagebläse genannt). Die Heizungsanordnung 19 umfasst zur Temperaturregelung des Heizungswärmetauschers 24 im Heizmittelvorlauf 20 eine elektrisch ansteuerbare Heizungswasserpumpe 28. Die Heizungswasserpumpe 28 ist über ein normalerweise integriertes Steuergerät 30 hinsichtlich der Förderstrommenge, des Ein- und Ausschaltens, etc. elektronisch steuerbar.

Wie dargestellt ist, kann gegenüber dem aus dem Stand der Technik bekannten Heizungskreislauf HK auf Ventile verzichtet werden. Hierzu ist unter anderem an der Schnittstelle SS zwischen dem Heizungskreislauf HK und dem Kühlkreislauf KK, insbesondere an der Schnittstelle SS von Heizmittelvorlauf 20 und Heizmittelrücklauf 22 mit dem Kühlkreislauf KK eine Bypass-Leitung 32 vorgesehen. Der Heizungsbypass oder die Bypass-Leitung 32 ist im Heizungskreislauf HK strömungseingangsseitig vor der Heizungswasserpumpe 28 angeordnet. Hierdurch kann das Kühlmittel im Kühlkreislauf KK weiter zirkulieren, wenn die Heizungswasserpumpe 28 stillsteht; in diesem Fall erfolgt keinerlei Kühlmittelumwälzung über den Heizungswärmetauscher. Je nach Einstellung der Heizungswasserpumpe 28 mittels einer Stellgröße U wird ein über den Fördervolumenstrom V der Heizungswasserpumpe 28 hinausgehender Wasserstrom W über die Bypass-Leitung 32 vor der Heizungswasserpumpe 28 abgezweigt. Im Fall eines maximalen Fördervolumenstroms V der Heizungswasserpumpe 28 wird der Wasserstrom W über die Bypass-Leitung 32 auf null reduziert.

In Fig. 2 ist das Blockschaltbild dargestellt, das den Ablauf des Verfahrens zur Regelung der Temperatur veranschaulicht. Am Heizungswärmetauscher 24 mit dem Gebläse 26 wird durch einen geeigneten Sensor 34 die Ist-Temperatur IWT_Ist nach dem Heizungswärmetauscher 24 erfasst. Anschließend wird die Temperaturdifferenz ΔT zwischen einer vorgebbaren Soll-Temperatur TWT_Soll (= Führungsgröße F) des Heizungswärmetauschers 24 und der Ist-Temperatur TWT_Ist nach dem Heizungswärmetauscher 24 gebildet und einem Temperaturregler 36, beispielsweise einem PI-Regler, zugeführt. Der Temperaturregler 36 verarbeitet die Temperaturdifferenz ΔT beispielsweise je nach Art des Reglers proportional, integral oder differential, z. B. P-, PI-, PID-Regler, zu einem Stellsignal Ur, das einem Stellglied 38 zugeführt wird. Das Stellglied 38 erzeugt anhand einer Stell-Kennlinie f(K) eine Stellgröße U für das Förderstromvolumen V der elektrisch steuerbaren Heizungswasserpumpe 28. Das Stellsignal U steuert die beispielsweise elektronisch kommutierte Heizungswasserpumpe 28 und damit den Fördervolumenstrom V durch den Heizungswärmetauscher 24.

Mit anderen Worten: In Abhängigkeit von der Regeldifferenz oder Temperaturdifferenz ΔT wird mittels des Temperaturreglers 36 und einer Stell-Kennlinie f(K) des Stellglieds 38 die Temperatur TWT_Ist hinter dem Heizungswärmetauscher 24 bzw. die Förderleistung (= Fördervolumen je Zeiteinheit, Fördervolumenstrom V) der elektrisch steuerbaren Heizungswasserpumpe 28 geregelt.

Je nach vorgegebener Betriebsart kann die Heizungswasserpumpe 28 dabei kontinuierlich betrieben werden. D. h. die Fördermenge der Heizungswasserpumpe 28 wird kontinuierlich eingestellt. Alternativ kann die Heizungswasserpumpe 28 getaktet betrieben werden, wobei eine Änderung der Stellgröße U eine Änderung des Pulsweitenmodulationsgrads der Ansteuerung der Heizungswasserpumpe 28 bewirkt. D. h. die Fördermenge der Heizungswasserpumpe 28 wird quasi stetig eingestellt. Hierzu ist das elektronische Steuergerät 30, welches beispielsweise integriert ist, der Heizungswasserpumpe 28 entsprechend ausgebildet und kann beispielsweise einen PWM-Modulator umfassen.

Wie im Ausführungsbeispiel dargestellt, handelt es sich vorliegend um eine so genannte einzelne wasserseitige Temperaturregelung des Heizungswärmetauschers 24. Für eine mehrzonige Temperaturregelung können entsprechend mehrere Heizungswasserpumpen 28 im Heizungskreislauf HK angeordnet sein. Insbesondere wäre eine zweizonige Temperaturregelung möglich, bei der zwei Heizungswasserpumpen 28 zur Steuerung von Förderstromvolumen V durch entsprechende Zonen des Heizungswärmetauschers 24 vorgesehen sind. Hierzu würde der Heizungskreislauf HK entsprechend aufgeteilt sein.

Die mit der Erfindung - wasserseitige Temperaturregelung des Heizungswärmetauschers 24 über die Heizungswasserpumpe 28 - erzielten Vorteile bestehen insbesondere darin, dass auf aufwendige Ventile und deren Steuerbauelemente im Heizungskreislauf HK verzichtet werden kann. Dies wiederum bewirkt ein konstantes Luftstromverhältnis, aber vor allem geringen Bauraumbedarf, geringere Kosten, Gewicht und Geräusche.

### Bezugszeichenliste

- 1: Heizungs- und Klimaanlage
- 2: Kühler
- 4: Lüfter (Kühlerlüfter)
- 6: Kühlmittelvorlauf
- - 8: Kühlmittelrücklauf
- 10: Kühlerbypass
- 12: Ventil
- 14: Kühlmittelpumpe
- 14': Abgriffe an den Zylindern eines Motorblocks
- 16: Vorlauf
- 18: Rücklauf
- 19: Heizungsanordnung
- 20: Heizmittelvorlauf
- 22: Heizmittelrücklauf
- 24: Heizungswärmetauscher
- 26: Gebläse (Klimagebläse)
- 28: Heizungswasserpumpe
- 30: integrierte EC-Motor-Steuerung
- 32: Heizungsbypass oder Bypass-Leitung
- 34: Sensor
- 36: Temperaturregler
- 38: Stellglied

- f(K): Stell-Kennlinie
- F: Führungsgröße
- HK: Heizungskreislauf
- KK: Kühlkreislauf
- SS: Schnittstelle
- TWT_Soll: Soll-Temperatur
- TWT_lst: Ist-Temperatur
- U: Stellgröße
- V: Förderstromvolumen
- W: Wasserstrom
- ΔT: Regel- oder Temperaturdifferenz

## Patentansprüche

1. Verfahren zur Regelung der Temperatur eines in einem Heizungskreislauf (HK) angeordneten Heizungswärmetauschers (24), insbesondere einer Heizungs- und Klimaanlage (1) für ein Fahrzeug, bei dem die Temperatur des Heizungswärmetauschers (24) wasserseitig geregelt wird, indem als Stellgröße (U) ein Fördervolumenstrom (V) einer im Heizungskreislauf (HK) angeordneten Heizungswasserpumpe (28) vorgegeben wird.

2. Verfahren nach Anspruch 1, bei dem die Temperaturdifferenz (ΔT) aus Soll-Temperatur (TWT_Soll) des Heizungswärmetauschers (24) und Ist-Temperatur (TWT_Ist) nach dem Heizungswärmetauscher (24) ermittelt wird.

3. Verfahren nach Anspruch 2, bei dem die Temperaturdifferenz (ΔT) mittels eines Temperaturreglers (36), insbesondere eines PI- oder eines PID-Reglers, und anhand einer Stell-Kennlinie (f(K)) zu der Stellgröße (U) verarbeitet wird, anhand derer der Fördervolumenstrom (V) eingestellt wird.

4. Verfahren nach einem der Ansprüche 1 bis 3, bei dem die Heizungswasserpumpe (28) kontinuierlich betrieben wird und eine Änderung der Stellgröße (U) eine Änderung des Fördervolumenstroms (V) der Heizungswasserpumpe (28) bewirkt.

5. Verfahren nach einem der Ansprüche 1 bis 4, bei dem die Heizungswasserpumpe (28) getaktet betrieben wird und eine Änderung der Stellgröße (U) eine Änderung des Pulsweitenmodulationsgrads der Ansteuerung der Heizungswasserpumpe (28) bewirkt.

6. Verfahren nach einem der Ansprüche 1 bis 5, bei dem ein über den Fördervolumenstrom (V) der Heizungswasserpumpe (28) hinausgehender Wasserstrom (W) vor der Heizungswasserpumpe (28) über eine Bypass-Leitung (32) abgeführt wird.

7. Verfahren nach einem der Ansprüche 1 bis 6, bei dem bei einem maximalen Fördervolumenstrom (V) der Heizungswasserpumpe (28) der Wasserstrom (W) über die Bypass-Leitung (32) auf null reduziert wird.

8. Heizungsanordnung (19), insbesondere für eine Heizungs- und Klimaanlage (1) eines Fahrzeugs, umfassend einen in einem Heizungskreislauf (HK) eines Verbrennungsmotors angeordneten Heizungswärmetauscher (24), dem eine elektrisch ansteuerbare Heizungswasserpumpe (28) vorgeschaltet ist, wobei die Heizungswasserpumpe (28) mit einem Temperaturregler (36) derart in Wirkverbindung steht, dass die Temperatur des Heizungswärmetauschers (24) wasserseitig geregelt wird, indem als Stellgröße (U) ein Fördervolumenstrom (V) einer Heizungswasserpumpe (28) vorgegeben wird.

9. Heizungsanordnung nach Anspruch 8, wobei an der Schnittstelle (SS) zwischen Heizungskreislauf (HK) und Kühlkreislauf (KK) eine Bypass-Leitung (32) vorgesehen ist.

10. Heizungsanordnung nach Anspruch 9, wobei die Bypass-Leitung (32) im Heizungskreislauf (HK) vor der Heizungswasserpumpe (28) abgezweigt wird und strömungsausgangsseitig in den Kühlkreislauf (KK) mündet.

11. Heizungsanordnung nach einem der Ansprüche 8 bis 10, wobei der Heizungswasserpumpe (28) des Heizungskreislaufs (HK) im Kühlkreislauf (KK) eine Kühlmittelpumpe (14) vorgeschaltet ist.

12. Heizungsanordnung nach einem der Ansprüche 8 bis 11, wobei mehrere Heizungswasserpumpen (28) zur mehrzonigen Temperaturregelung des Wärmetauschers (24) im Heizungskreislauf (HK) angeordnet sind.
